# FASCICULE DE BREVET EUROPEEN

(11) **EP 1 848 776 B1**
(45) Date de publication et mention de la délivrance du brevet: **04.12.2019**
(21) Numéro de dépôt: 06709330.2
(22) Date de dépôt: 14.02.2006
(51) Int. Cl.: C08L 101/02, C08F 8/30

(54) **MATERIAUX ELASTIQUES**
ELASTISCHE MATERIALEN
ELASTIC MATERIALS

(30) Priorité: 15.02.2005 FR 0501528; 22.03.2005 US 663988 P
(43) Date de publication de la demande: 31.10.2007
(73) Titulaire: ARKEMA FRANCE, 92700 Colombes (FR)
(72) Inventeur: TOURNILHAC, François, F-75012 Paris (FR); LEIBLER, Ludwik, F-75006 Paris (FR); CORDIER, Philippe, F-92500 Rueil Malmaison (FR); SOULIE-ZIAKOVIC, Corinne, F-75013 Paris (FR)
(74) Mandataire: Schaefer, Anne-Sophie
(86) Numéro de dépôt international: PCT/FR2006/000355
(87) Numéro de publication internationale: WO 2006/087475

(56) Documents cités:
- WO-A-97/49686
- WO-A-03/059964
- WO-A-2004/016598
- WO-A1-2006/016041
- BRUNSVELD L ET AL: "Supramolecular polymers" CHEMICAL REVIEWS, AMERICAN CHEMICAL SOCIETY. EASTON, US, vol. 101, décembre 2001 (2001-12), pages 4071-4097, XP002267453 ISSN: 0009-2665
- LANGE R F M ET AL: "HYDROGEN-BONDED SUPRAMOLECULAR POLYMER NETWORKS" JOURNAL OF POLYMER SCIENCE, POLYMER CHEMISTRY EDITION, INTERSCIENCE POUBLISHERS, NEW YORK, NY, US, vol. 37, 1999, pages 3657-3670, XP002907040 ISSN: 0360-6376
- FOLMER B J B ET AL: "SUPRAMOLECULAR POLYMER MATERIALS: CHAIN EXTENSION OF TELECHELIC POLYMERS USING A REACTIVE HYDROGEN-BONDING SYNTHON" ADVANCED MATERIALS, VCH VERLAGSGESELLSCHAFT, WEINHEIM, DE, vol. 12, no. 12, 16 juin 2000 (2000-06-16), pages 874-878, XP000959548 ISSN: 0935-9648

## Description

### [Domaine de l'invention]

La présente invention concerne des matériaux élastiques présentant la propriété d'élasticité caoutchoutique. Plus précisément, ces matériaux sont constitués de molécules unies par des liaisons non covalentes ou physiques, par exemple des liaisons hydrogène. Ces matériaux ont des propriétés pouvant rappeler celles d'un caoutchouc. Contrairement aux élastomères classiques, les matériaux selon l'invention peuvent devenir fluides au-dessus d'une certaine température, ce qui est un avantage dans les étapes de mise en oeuvre et de recyclage de ces matériaux. Par définition, un élastomère doit à la fois présenter une stabilité dimensionnelle sur des temps très longs et être capable après de très grandes déformations (allongement de 100 à 600%) de recouvrer sa forme initiale. La propriété d'élasticité caoutchoutique s'apprécie aussi par la déformation rémanente après relâchement de la contrainte ayant provoqué la déformation. Ces matériaux sont utilisés pour fabriquer des joints d'étanchéité, des isolants thermiques, acoustiques, des pneumatiques, des câbles, des gaines, des semelles de chaussures, des emballages, des revêtements (des peintures, des produits cosmétiques, des films), des colliers de serrage élastiques, des tubes à vide, des tubes et flexibles de transport, des additifs rhéologiques (ex : cosmétique) des fluides ou en tant qu'additifs dans des adhésifs et dans des colles thermofusibles (appelé Hot-melt en terminologie anglosaxonne).

### [L'art antérieur et le problème technique]

Par élasticité caoutchoutique, on entend que le matériau subissant une déformation uniaxiale de 20% pendant une durée de 15 minutes à la température d'utilisation retrouve sa dimension initiale avec une déformation rémanente inférieure à 5% de la dimension initiale, c'est à dire que le matériau de longueur initiale L₀ avant déformation a été déformé sous contrainte uniaxiale à une longueur L_{d} pendant 15 minutes toujours à la température d'utilisation tel que (L_{d}-L₀)/L₀ est supérieur ou égal à 0,2 et retrouve une longueur L_{f}, Longueur finale du matériau après relâchement de la contrainte tel que (L_{f}-L₀)/L₀ est inférieur à 0,05, avantageusement (L_{d}- L₀)/L₀ est supérieur ou égal à 0,8, de préférence (L_{d}-L₀)/L₀ est supérieur ou égal à 1. L'élasticité caoutchoutique est en principe une propriété caractéristique des systèmes polymères. Habituellement, elle ne se manifeste ni dans les matériaux inorganiques (verres, métaux, oxydes, solides ioniques...) ni dans les matériaux moléculaires, que ceux-ci soient cristallins ou amorphes. Les élastomères traditionnels tels que le caoutchouc SBR (abréviation de Styrène Butadiène Rubber) ou le NBR (abréviation de Nitrile Butadiène Rubber) sont des polymères résultant de l'enchaînement de molécules (monomères) attachées les unes aux autres par des liaisons covalentes. Ces polymères peuvent en plus être réticulés. Les objets constitués de ces élastomères ont une forme définitive à la différence des objets constitués d'un polymère thermoplastique. Ainsi les objets en polyamide 6 (polymère thermoplastique) sont fabriqués par moulage ou injection du PA 6 qui est liquide au-delà de 210°C puis en refroidissant on obtient l'objet. On peut chauffer l'objet et au-delà de 210°C il devient du PA 6 liquide, ce PA 6 liquide peut de nouveau être moulé ou injecté et ainsi de suite. Il existe aussi des élastomères thermoplastiques, par exemple les polyetherblocamides ou les EPR (abréviation de Éthylène Propylène Rubber). Ces polymères se transforment de la même façon que le PA 6 (ils sont liquides au delà d'une certaine température et solides en dessous), les objets obtenus ont des propriétés élastomériques mais ils n'ont pas une forme définitive comme les objets constitués d'élastomères réticulés.

Cependant les élastomères réticulés ou non, les élastomères thermoplastiques et les polymères thermoplastiques résultent tous de l'enchaînement de molécules (monomères) attachées les unes aux autres par des liaisons covalentes qu'on appelle macromolécules, ces macromolécules ont des masses moléculaires d'au moins 10000 g/mole.

On a maintenant trouvé un matériau, ayant des propriétés élastiques, constitué de molécules unies par des liaisons non covalentes, par exemple des liaisons hydrogène. Contrairement aux élastomères classiques, celui-ci peut devenir fluide au dessus d'une certaine température, ce qui est un avantage dans les étapes de mise en oeuvre et de recyclage de ces matériaux. Il est entendu ici que le mot "molécules" utilisé dans la description de cette invention s'oppose au mot "macromolécules", il s'agit donc de composés dont la masse moléculaire est inférieure à 9000 g/mole et typiquement de l'ordre de 500 à 1500 g/mole.

L'art antérieur a déjà décrit des polymères supramoléculaires. Ainsi la demande de brevet WO 03 059964 décrit un polymère supramoléculaire comprenant des motifs reliés par des liaisons hydrogène, ces motifs étant des monomères ou des prépolymères comprenant au moins une fonction choisie parmi les fonctions (1) et (3) et une deuxième fonction choisies parmi les fonctions (1) à (5) suivantes : 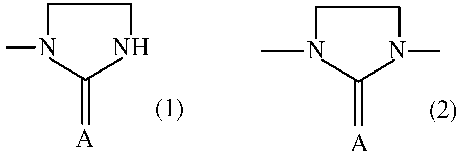 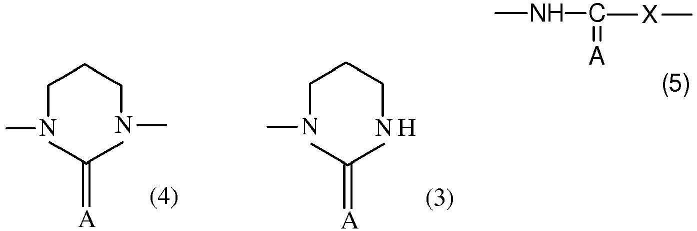 dans lesquelles A désigne l'oxygène, le soufre ou NH et X un motif quelconque; les liaisons hydrogène dans le polymère supramoléculaire se faisant entre deux fonctions identiques ou différentes choisies parmi les fonctions (1) à (5).

Les polymères de l'invention peuvent être utilisés seuls c'est à dire sous forme de composition constituée essentiellement de ces polymères et éventuellement de stabilisants, d'antioxydants soit sous forme de mélange avec d'autres polymères ou d'autres produits. Dans cet art antérieur les élastomères ne sont pas décrits ni suggérés. Dans l'exemple 5 de cet art antérieur on part du Crayamid 115® qui est une polyamidoamine (*M̅w̅* ∼2000-4000 g/mole), produit de condensation d'un dimère d'acide type TOFA (abréviation anglo-suédoise de Tall Oil Fatty Acid ou acide gras provenant du pin) et de triethylene tetramine, TETA. Puis par réaction avec l'urée on obtient un produit ayant deux fonctions imidazolidone. Comme précisé dans la demande de brevet WO 03/059964, la présence de trimère d'acide à l'état de traces dans le dimère d'acide utilisé peut conduire à la formation de molécules comportant trois groupes imidazolidones. Cependant, de par la faible quantité de trimères effectivement présents dans les dimères d'acides utilisés et du fait de la présence d'impuretés dans la TETA utilisée (dont les grades commerciaux son typiquement d'une pureté de 60%), la réaction de polyamidoamines, tels que le Crayamid 115, avec l'urée ne permet pas d'engendrer un nombre important de molécules nanties de trois groupes imidazolidones. Les molécules décrites dans ce document ne permettent pas d'avoir un matériau présentant l'élasticité caoutchoutique.

L'invention a pour objet un matériau comprenant au moins une molécule de masse moléculaire en nombre comprise entre 500 et 1500 g/mole, ladite molécule comprenant au moins trois groupes fonctionnels associatifs, chaque groupe fonctionnel associatif répondant à la formule (1) suivante : 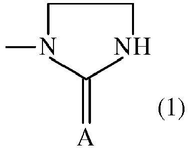 dans laquelle A désigne l'oxygène, les atomes de carbone sur la formule (1) pouvant être substitués, susceptible de former une liaison physique, les molécules susceptibles de former des liaisons physiques étant issues de triacides ou d'un mélange comprenant des diacides et des triacides, ces diacides ou triacides comportant au moins 5 atomes de carbone,
ledit matériau étant caractérisé en ce qu'il comprend (i) des molécules ayant au moins 3 groupes associatifs et (ii) des molécules ayant un seul groupe associatif, telles que la différence entre le nombre de groupes associatifs appartenant aux molécules qui possèdent au moins trois groupes associatifs par molécule et le double du nombre total de molécules comportant au moins trois groupes associatifs est supérieur à 80% du nombre de molécules comportant un seul groupe associatif, et telles que la masse moléculaire en nombre des molécules constituant le matériau est comprise entre 500 et 1500 g/mole,
et qu'il présente une élasticité caoutchoutique mesurée à la température d'utilisation, ladite élasticité caoutchoutique étant définie par le fait qu'après une déformation sous contrainte uniaxiale pendant 15 minutes dudit matériau d'une longueur initiale L₀ à une longueur L_{d} tel que (L_{d}-L₀)/L₀ est supérieur ou égale à 0,2, le matériau se retrouve après relâchement de la contrainte uniaxiale avec une longueur L_{f} tel que (L_{f}-L₀)/L₀ est inférieur supérieur ou égale à 0,05 sachant que L₀ est la longueur initiale du matériau, L_{d} est la longueur du matériau déformé sous contrainte uniaxiale et L_{f} est la longueur finale du matériau après relâchement de la contrainte uniaxiale.

Selon un mode de réalisation, le matériau est caractérisé en ce que (L_{d}-L₀)/L₀ est supérieur ou égal à 0,8.

Selon un mode de réalisation le matériau est caractérisé en ce que (L_{d}-L₀)/L₀ est supérieur ou égal à 1.

Selon un mode de réalisation, le matériau est caractérisé en ce que les molécules susceptibles de former des liaisons physiques sont d'origine végétale.

Selon un mode de réalisation, le matériau est caractérisé en ce que les molécules susceptibles de former des liaisons physiques sont des molécules ayant de 24 à 90 atomes de carbone.

Selon un mode de réalisation, le matériau est caractérisé en ce que les molécules susceptibles de former des liaisons physiques sont des dimères ou des trimères.

Selon l'invention, la différence entre le nombre de groupes associatifs appartenant aux molécules qui possèdent au moins trois groupes associatifs par molécule et le double du nombre total de molécules comportant au moins trois groupes associatifs est supérieur à 80% du nombre de molécules comportant un seul groupe associatif où associatifs signifie capables de s'associer par des liaisons physiques.

Selon un mode de réalisation, cette différence est supérieure à 100% , avantageusement supérieure à 150%.

Selon l'invention, la masse moléculaire des molécules constituant le matériau est comprise entre 500 et 1500 g/mole.

Selon un mode de réalisation, sur chacune des molécules ayant au moins 3 groupes associatifs capables de s'associer par des interactions non covalentes l'un des groupes au moins a la formule suivante: 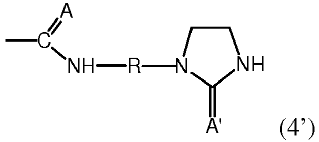 dans laquelle A et A' désignent l'oxygène, R un motif organique de masse comprise entre 14 et 300.

Selon un mode de réalisation, R est choisi parmi le groupement -CH₂-CH₂- et le groupement -CH₂-CH₂-NH-CH₂-CH₂-.

Selon un mode de réalisation, tous les groupes associatifs des molécules ayant au moins 3 groupes associatifs sont de formule (4').

Selon un mode de réalisation, les molécules unies par des liaisons non covalentes sont choisies parmi : 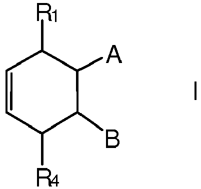 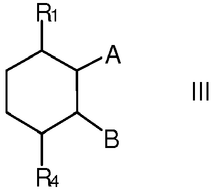 où (A,B) = (R₂,R₃) ou (R₃,R₂)
dans lesquelles R₁, R₂ sont des chaînes hydrocarbonées saturées ou insaturées terminées par un groupement amide secondaire porteur d'une terminaison 2-imidazolidone et R₃, R₄ des chaînes hydrocarbonées saturées ou insaturées.

Selon un mode de réalisation, les molécules unies par des liaisons non covalentes sont choisies parmi : 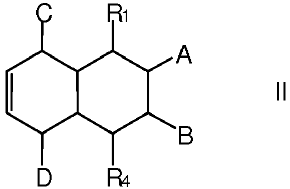 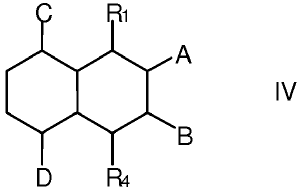 où (A,B) = (R₂,R₃) ou (R₃,R₂), (C,D) = (R₆,R₅) ou (R₅,R₆)
dans lesquelles R₁, R₂ et R₅ sont des chaînes hydrocarbonées saturées ou insaturées terminées par un groupement amide secondaire porteur d'une terminaison 2-imidazolidone et R₃, R₄ et R₆ des chaînes hydrocarbonées saturées ou insaturées.

Selon un mode de réalisation,
R₁, R₅ = 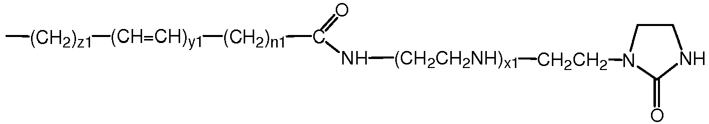 dans lesquels n₁ = 5 à 8, x₁ = 0 ou 1, y₁ = 0 ou 1, z₁ = 0 ou 1
R₂ = 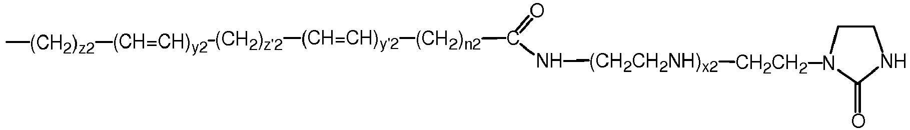 dans lequel :
n₂ = 5 à 8, x₂ = 0 ou 1, y₂ = 0 ou 1, z₂ = 0 ou 1, y'₂ = 0 ou 1, z'₂ = 0 ou 1.
R₃, R₄, R₆ = -(CH₂)_{z3}-(CH=CH)ₓ₃-(CH₂)ₙ₃-CH₃
où n₃ = 1 à 5, x₃ = 0 ou 1, z₃ = 0 ou 1.

L'invention est également relative à des objets constitués en partie ou en totalité du matériau selon l'une quelconque des revendications précédentes.

### [Brève description de l'invention]

La présente invention concerne un matériau présentant la propriété d'élasticité caoutchoutique. Ledit matériau est constitué de molécules de masse comprise entre 500 et 1500 g/mole, tout ou partie des molécules ayant au moins trois groupes, désignés aussi par "groupes associatifs", lesdits groupes associatifs étant eux-mêmes constitués d'une ou plusieurs fonctions capables de s'associer par des liaisons physiques.

Tout en étant constitué de petites molécules non polymérisées et non réticulées chimiquement, ce matériau présente des propriétés d'élasticité caoutchoutique qui sont l'apanage des macromolécules. Selon une forme de l'invention, ce matériau présente de l'élasticité caoutchoutique à température ambiante. Au-dessus d'une certaine température le matériau coule comme un liquide simple. Le matériau est thermoréversible, c'est à dire que par refroidissement on retrouve un matériau présentant la propriété d'élasticité caoutchoutique. Ce matériau est auto-réparable et potentiellement recyclable ce qui n'est jamais le cas d'un élastomère chimiquement réticulé. Selon la nature des molécules constituant le matériau on peut faire varier un certain nombre de paramètres tels que les propriétés élastiques notamment le temps de relaxation à diverses températures, les propriétés de fluage, la température de transition vitreuse T_{g}, la température à laquelle le matériau devient fluide T_{f}, la solubilité dans différents milieux, la résistance chimique.

Les propriétés du matériau mentionnées ci dessus peuvent aussi être modulées par addition d'adjuvants tels que plastifiants, additifs anti-oxydants etc. Le matériau de l'invention peut être dissout dans certains solvants, ce qui est un avantage par rapport aux élastomères réticulés conventionnels.

Selon l'invention les molécules constituant le matériau de l'invention portent des groupes associatifs de formule (1) suivante : 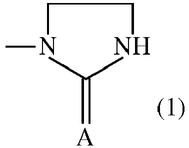 dans laquelle A désigne l'oxygène, les atomes de carbone sur la formule (1) peuvent être substitués.

En utilisant le groupe de formule (1), de préférence imidazolidone, on peut réaliser des matériaux élastiques possédant des propriétés uniques. Tout en étant constituées de petites molécules non polymérisées et non réticulées chimiquement, ce matériau présente des propriétés d'élasticité caoutchoutique qui sont l'apanage des macromolécules. A haute température (>180°C) le matériau coule comme un liquide simple.

Le matériau suivant l'invention est susceptible de gonfler en présence d'eau ou d'humidité. L'addition d'eau est également un moyen de faire varier les propriétés mentionnées ci-dessus.

L'invention concerne aussi les objets constitués en partie ou en totalité de ce matériau.

### [Description détaillée de l'invention]

**S'agissant de l'élasticité caoutchoutique**, on peut l'apprécier en observant le comportement du matériau au cours d'un allongement ou d'une compression. On soumet une éprouvette du matériau en traction à un allongement de 20% pendant 15 minutes à la température considérée et on mesure ensuite, quand on a relâché la traction, la déformation résiduelle par comparaison avec l'éprouvette avant traction. La déformation résiduelle est inférieure à 5%. On mesure aussi la déformation résiduelle après une compression de 20% pendant 15 minutes, la déformation résiduelle est aussi inférieure à 5%. L'élasticité caoutchoutique au sens de l'invention est définie par l'équation (L_{f}-L₀)/L₀ inférieur ou égale à 0,05 après déformation du matériau pendant 15 minutes à température d'utilisation et (L_{d}-L₀)/L₀ est supérieur ou égale à 0,2, avantageusement 0,8, de préférence 1.
L₀ : longueur initiale du matériau
L_{d} : longueur du matériau déformé sous contrainte uniaxiale
L_{f} : longueur finale du matériau après relâchement de la contrainte.

**S'agissant des molécules constituant le matériau**, il est nécessaire qu'au moins certaines d'entre'elles possèdent au moins trois groupes capables de s'associer par des interactions non covalentes. Pour ceci, les groupements associatifs doivent être bien choisis mais le milieu a aussi son importance. Dans un milieu peu polaire, si les groupements associatifs sont environnés par exemple de chaînes hydrocarbonées, les interactions électrostatiques sont fortes, dans un milieu polaire au contraire si les groupements associatifs sont environnés par exemple de chaînes polyoxyéthylène, les interactions électrostatiques sont affaiblies. De préférence, les molécules doivent présenter une constante d'association dans le milieu supérieure à 1000 Lmol⁻¹ et avantageusement supérieure à 10000 Lmol⁻¹.

Il est recommandé aussi d'éviter la formation de cristaux moléculaires. Pour ceci, l'homme de l'art sait qu'on peut avantageusement utiliser des molécules flexibles ou ramifiées et qu'un mélange de molécules semblables mais pas identiques est bénéfique.

Le matériau est par exemple constitué (i) de molécules ayant au moins 3 groupes associatifs (ii) de molécules ayant deux groupes associatifs et (iii) de molécules ayant un seul groupe associatif. Avantageusement la différence entre le nombre de groupes associatifs appartenant aux molécules qui possèdent au moins trois groupes associatifs par molécule et le double du nombre total de molécules comportant au moins trois groupes associatifs est supérieur à 80% du nombre de molécules comportant un seul groupe associatif (où associatifs signifie capables de s'associer par des interactions non covalentes). De préférence cette différence est supérieure à 100% et mieux encore supérieure à 150%.

Avantageusement la masse moléculaire des molécules constituant le matériau est comprise entre 500 et 1500 g/mole.

Avantageusement les groupes associatifs des molécules constituant le matériau sont de formule (1) tel que décrit plus haut. Soit ce groupe est présent sur la molécule soit il est fixé sur une molécule soit encore il est obtenu par réaction d'un produit de formule (2') : 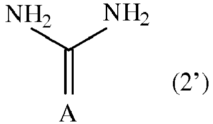 sur une molécule portant les enchaînements (2") suivants : 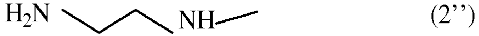 On peut aussi fixer les groupes associatifs de formule (1) sur des molécules pour obtenir les molécules constituants le matériau de l'invention. Par exemple on peut fixer le produit de formule (3') suivante : 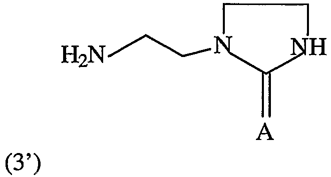 par réaction de la fonction amine avec une fonction époxy ou acide ou anhydride présente sur la molécule. Le produit de formule (3') peut être obtenu par réaction du produit de formule (2') sur la diethylène triamine de formule:

H₂N-CH₂CH₂-NH-CH₂CH₂-NH₂

Lorsque dans la formule (3') A=0, on a la 1-béta-aminoéthyl-2-imidazolidone appelée aussi 1-(2-aminoéthyl)imidazolidin-2-one (n°CAS 6281-42-1) que l'on retrouve dans US-2,613,212 ainsi que son procédé de synthèse.

De préférence sur chacune des molécules ayant au moins 3 groupes associatifs capables de s'associer par des interactions non covalentes l'un au moins a la formule suivante: 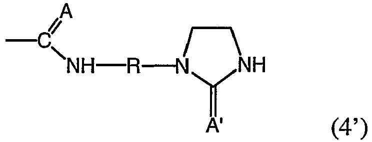 dans laquelle A et A' désignent l'oxygène, le soufre ou NH, R un motif organique de masse comprise entre 14 et 300 g/mole. Les atomes de carbone sur la formule (4') peuvent être substitués. De préférence R est choisi parmi le groupement -CH₂-CH₂- et le groupement -CH₂-CH₂-NH-CH₂-CH₂-

Avantageusement tous les groupes associatifs des molécules ayant au moins 3 groupes associatifs sont de formule (4').

Une molécule possédant des groupes associatifs de formule (4') dans lesquels A désigne l'oxygène peut être obtenue par réaction d'un produit de formule (3') sur les groupes acides carboxyliques d'un polyacide éventuellement hydrogéné lui-même obtenu à partir d'acides gras. Cette molécule possédant des groupes associatifs de formule (4') dans lesquels A désigne l'oxygène peut aussi être obtenue par réaction d'un acide avec une amine du type diéthylène triamine (DETA) ou triéthylène tetramine (TETA) puis réaction avec un produit de formule (2') telle que l'urée.

A titre d'exemple de molécules constituant le matériau on peut citer les molécules suivantes : 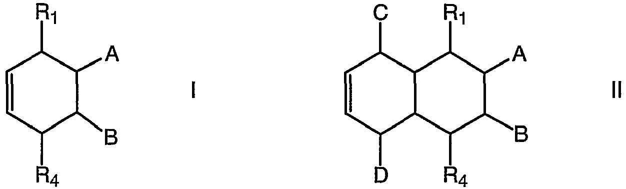 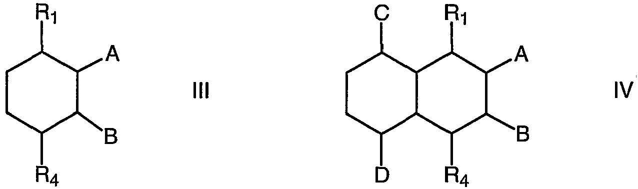 où (A,B) = (R₂,R₃) ou (R₃,R₂), (C,D) = (R₆,R₅) ou (R₅,R₆)
dans lesquelles R₁, R₂ et R₅ sont des chaînes hydrocarbonées saturées ou insaturées terminées par un groupement amide secondaire porteur d'une terminaison 2-imidazolidone et R₃, R₄ et R₆ des chaînes hydrocarbonées saturées ou insaturées.
Avec de préférence dans les formules I à IV précédentes :
R₁, R₅ = 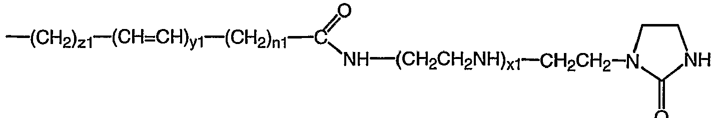 dans lesquels n₁ = 5 à 8, x₁ = 0 ou 1, y₁ = 0 ou 1, z₁ = 0 ou 1
R₂ = 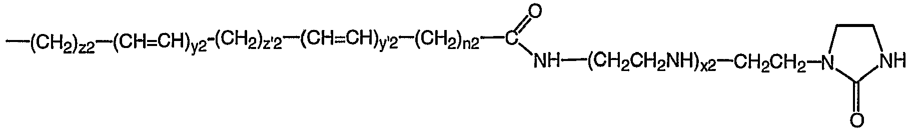 dans lequel :
n₂ = 5 à 8, x₂ = 0 ou 1, y₂ = 0 ou 1, z₂ = 0 ou 1, y'₂ = 0 ou 1, z'₂ = 0 ou 1.
R₃, R₄, R₆ = -(CH₂)_{z3}-(CH=CH)ₓ₃-(CH₂)ₙ₃-CH₃
où n₃ = 1 à 5, x₃ = 0 ou 1, z₃ = 0 ou 1.
Les groupements R₁ à R₆ peuvent se trouver en position axiale ou équatoriale.
Selon une forme particulière, lorsque les produits sont obtenus à partir de dimères d'acides gras non hydrogénés riches en acide linolénique, les produits majoritaires suivant les formules I et II pourront avoir la structure suivante, (VI, VII). 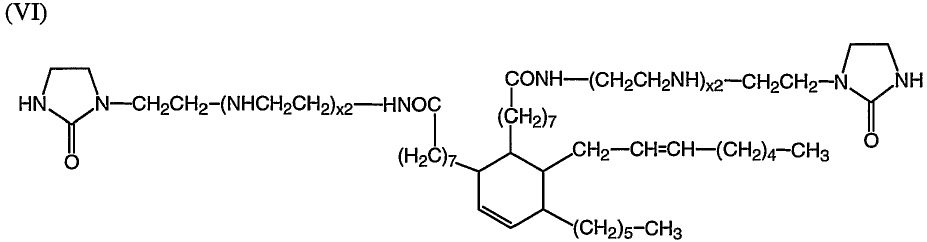 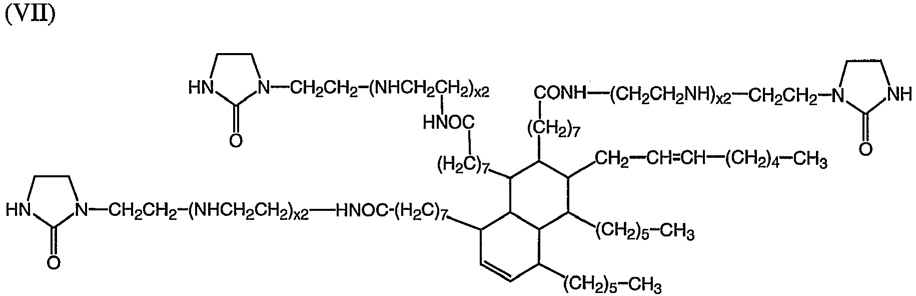 dans laquelle x₂ = 0 ou 1.
Les molécules susceptibles de former des liaisons physiques peuvent être issues des acides gras, c'est à dire des acides carboxyliques saturés ou insaturés comportant au moins 5 atomes de carbone tel que les diacides linéaires comme l'acide glutarique, l'acide adipique, l'acide pimélique, l'acide subérique, l'acide azélaïque, l'acide sébacique, ou ramifiés comme l'acide 3,3-diméthyle glutarique, les dimères et trimères d'acides gras d'origine végétale tels que l'acide laurique, myristique, palmitique, oléique, linoléique, stéarique, linoléique que l'on trouve notamment dans l'huile de pin, colza, maïs, tournesol, soja, pépins de raisin. Par dimères ou trimères d'acides gras, on entend des oligomères de 1, 2 ou 3 monomères, identiques ou différents. Avantageusement, ces acides carboxyliques saturés ou insaturés comportent de 12 à 100 atomes de carbones et encore plus avantageusement entre 24 et 90 atomes de carbone.

La synthèse peut s'effectuer en deux étapes, d'abord par réaction du dimère d'acide avec une amine qui peut être la diéthylène triamine (DETA) (x2=0) ou la triéthylène tetramine (TETA) (x2=1) produisant une diamide (V), qui dans une deuxième étape est traitée par l'urée de façon à obtenir la di-imidazolidone (VI). Selon l'invention, le dimère d'acide utilisé renferme une certaine proportion de trimère d'acide, le matériau obtenu par cette méthode de synthèse comportera aussi une certaine proportion de la molécule VII, caractérisée par la présence de plus de deux groupements 2-imidazolidone. De façon similaire, lorsque le dimère d'acide utilisé renferme une certaine proportion de tetramères, pentamères ou autres molécules portant plus de deux fonctions acides, le matériau obtenu par cette méthode de synthèse comportera des molécules caractérisées par la présence de plus de deux groupements 2-imidazolidone. 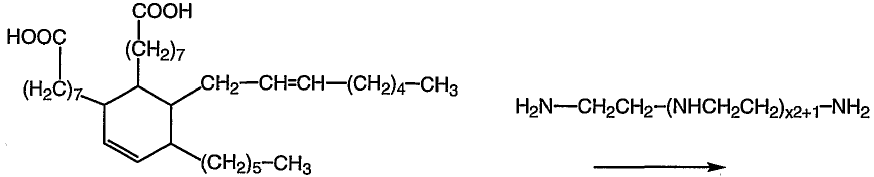 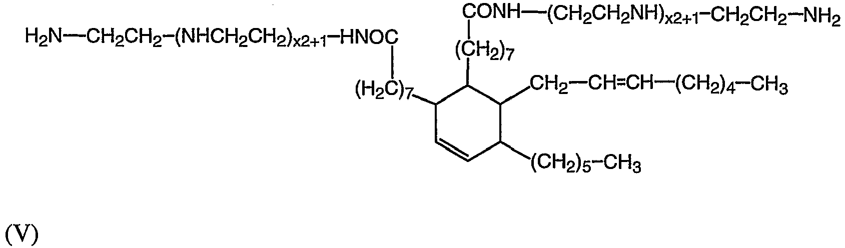 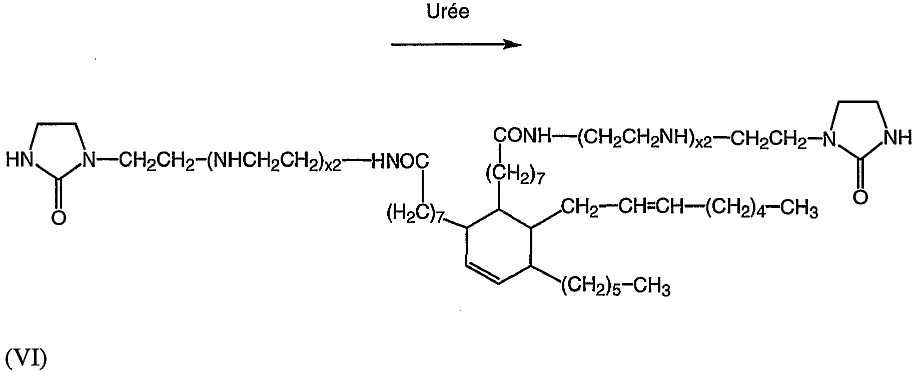 Dans le cas où les produits sont obtenus à partir de dimères d'acides gras d'origine naturelle, non hydrogénés, partiellement ou totalement hydrogénés on a généralement affaire à un mélange de différentes molécules suivant les formules (I) à (IV). Cette caractéristique permet de faire varier à volonté les propriétés du matériau final, par un choix judicieux du dimère d'acide et de l'amine utilisés dans la synthèse.
En plus des exemples de groupes associatifs donnés ci-dessus, on peut citer également comme exemple de groupe associatif l'uréidopyrimidone décrite dans le doc US-6,320,018.

**S'agissant de la température au-dessus de laquelle le matériau devient fluide**, elle est fonction de la nature des molécules. Elle est habituellement comprise entre 180 et 270°C. Elle augmente avec x₁ et augmente quand la polarité du milieu diminue.

**S'agissant de l'allongement à la rupture**, Il existe un domaine de température dans lequel il peut être compris entre 50 et 700%. Cet allongement à la rupture est mesuré à l'aide d'éprouvettes de traction suivant la norme ISO 527.

**S'agissant des propriétés du matériau**, il est soluble dans l'alcool benzylique à 60°C.

La prise en eau est de 17% en masse après une immersion dans l'eau pendant 5 jours à température ambiante.

Le matériau gonfle en présence d'hydrocarbures saturés ou insaturés tels que le dodécane, ceci permet d'abaisser la température de transition vitreuse. De préférence on choisira un agent de gonflement non volatil.

Il est autoréparable, par exemple après une élongation allant jusqu'à la rupture on peut mettre en contact à température ambiante les faces du matériau ou s'est produit la rupture et on constate qu'il y a soudure. On peut de nouveau effectuer une traction.

Par rapport aux élastomères thermoplastiques conventionnels, les matériaux selon l'invention coulent comme des liquides moléculaires à haute température. Ceci est un avantage dans le cas d'une mise en oeuvre par injection et moulage: d'une part la fluidité permet d'accélérer les cadences dans ce type de processus, d'autre part de répliquer plus fidèlement les détails du moule. Les matériaux suivant l'invention sont solubles dans l'alcool benzylique mais résistants à la plupart des solvants. Les matériaux de l'invention peuvent contenir des additifs notamment eau, plastifiants.

Quant aux utilisations on peut citer les objets présentant l'autoréparabilité. On peut regler Tg et Tf des matériaux par la composition. On peut aussi régler les temps de relaxation par les plastifiants.

### [Exemples]

### Exemple 1 : Synthèse UT 1008 (DA+TETA+urée)

Dans un réacteur à double enveloppe thermorégulée de 250 mL muni d'une agitation à ancre et d'un balayage d'azote, on ajoute 15.00 g (0.103 mol) de TETA, 57.00 g de Empol1008® (mélange d'acides gras contenant 3.5% de monoacide de masse 280 ± 70 g/mole, 89.5% de diacide (formules I, III) et 7% de triacide (formules II, IV) et polyacide dérivés du monoacide. La réaction est menée à 160°C pendant 24h. Le mélange est alors refroidi à 130°C.
On rajoute alors 6.60g (0.11 mol) d'urée. Après environ 5min, on observe un dégagement gazeux d'ammoniac (vérifiée par papier pH), qui s'accompagne d'un moussage du milieu réactionnel.
Lorsque le dégagement d'ammoniac diminue, on augmente la température de 5°C en 5°C et ainsi de suite jusqu'à 150°C. Le mélange réactionnel devient difficile à agiter. On arrête le chauffage et on récupère le produit UT 1008 en le décollant de l'ancre d'agitation. On le place alors dans une étuve à vide pendant une semaine à 70°C (vide de 5mmHg) pour évacuer l'ammoniac. Le matériau obtenu est pressé à 130°C sous forme de plaques de 1 à 3 mm d'épaisseur. Les plaques sont lavées par immersion dans l'eau déminéralisée pendant 2 semaines.

### Exemple 2 : Synthèse UD 1018 (DA+DETA+urée)

Dans un réacteur à double enveloppe thermorégulée de 250 mL muni d'une agitation à ancre et d'un balayage d'azote, on ajoute 22.00 g (0.194 mol) de DETA, 54.40 g de Empol 1018® (mélange d'acides gras contenant 4% de monoacide de masse 280 ± 70 g/mol, 79% de diacide (formules I, III) et 17% de triacide (formules II, IV) et polyacide dérivés du monoacide La réaction est menée à 160°C pendant 24h. Le mélange est alors refroidi à température ambiante.
A ce produit on rajoute environ 70 mL de chloroforme pour solubiliser le produit. On rajoute ensuite de l'eau déminéralisée (150 mL) . On agite le mélange afin d'extraire l'excès de DETA de la phase organique. Après séparation des deux phases on retire la phase aqueuse et on répète l'opération une seconde fois. Ensuite on évapore le chloroforme à 70°C sous un fort courant d'azote.
Une fois le chloroforme évaporé, le mélange est chauffé à 130°C. On rajoute alors 11.65g (0.194 mol) d'urée. Après environ 5min, on observe un dégagement gazeux d'ammoniac (vérifiée par papier pH), qui s'accompagne d'un moussage du milieu réactionnel.
Lorsque le dégagement d'ammoniac diminue, on augmente la température de 5°C en 5°C et ainsi de suite jusqu'à 150°C. Le mélange réactionnel devient difficile à agiter. On arrête le chauffage et on récupère le produit UD 1018 en le décollant de l'ancre d'agitation. On le place alors dans une étuve à vide pendant une semaine à 70°C (vide de 5mmHg) pour évacuer l'ammoniac.
Après chaque étape on effectue des analyses de chromatographie par perméation de gel (GPC), dans l'alcool benzylique à 130°C, pour vérifier qu'il n'y a pas de polymérisation et que les masses des composés restent faibles (Mn<1500g.mol-1)

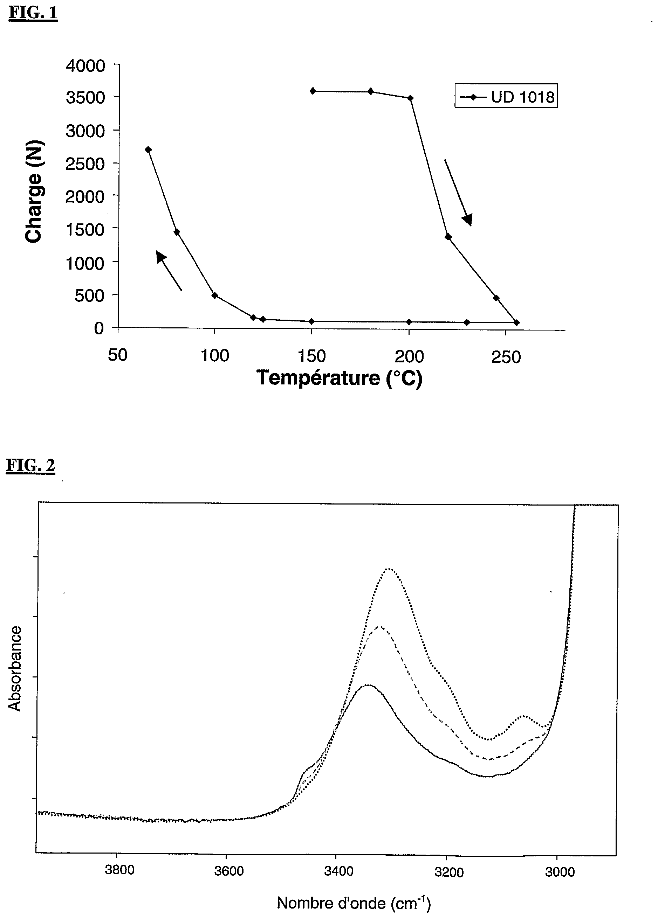

Dans une mini-extrudeuse DACA, on introduit 2.5g de UD 1018 à 150°C. On note l'évolution de la charge en fonction de la température. Les résultats à l'échauffement et au refroidissement sont rapportés sur la **FIG.1****.**

La **FIG.2** est le spectre infrarouge du composé **UD1018** montrant la zone d'absorption des liaisons N-H libres (3452 cm⁻¹) et liés (3310-3340 et 3077 cm⁻¹) au cours d'un refroidissement. Ligne continue T= 246°C, ligne discontinue T = 148°C, ligne pointillée T = 65°C.

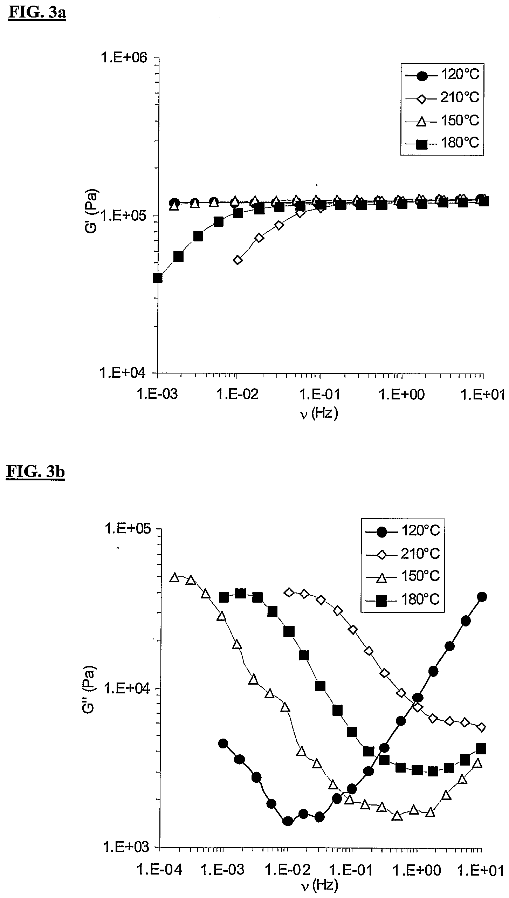

Les **FIG.3a** **et b** représentent les isothermes des modules de stockage, G'(ν) **FIG.3a** et de pertes, G"(ν) **FIG.3b** du composé **UT1008** en fonction de la fréquence de sollicitation.

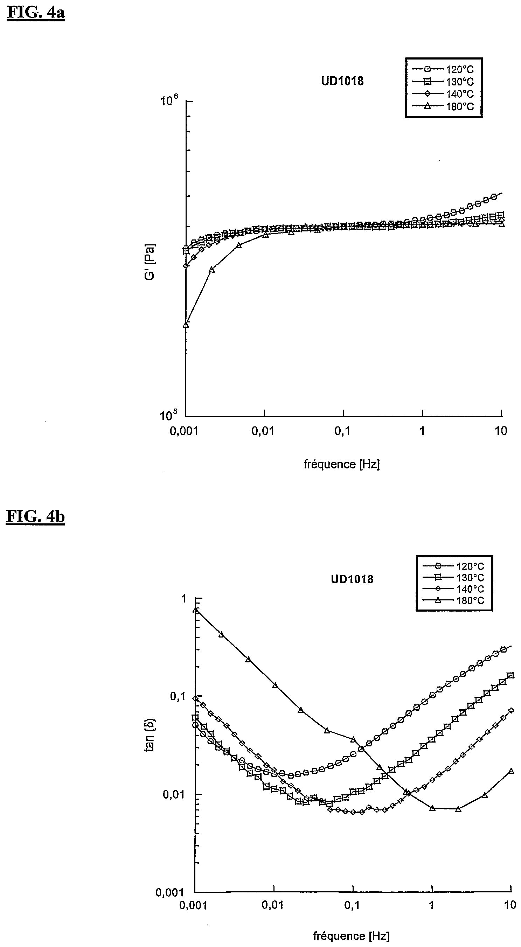

Les **FIG.4a** **et b** représentent les isothermes du module de stockage, G'(ν) **FIG.4a** et du facteur de pertes, tan(□) = G"(ν)/ G'(ν) **FIG.4b** du composé **UD1018** en fonction de la fréquence de sollicitation. **FIG.4a**/ courbes normalisées à 0.1 Hz pour tenir compte de différentes géométries d'échantillon.

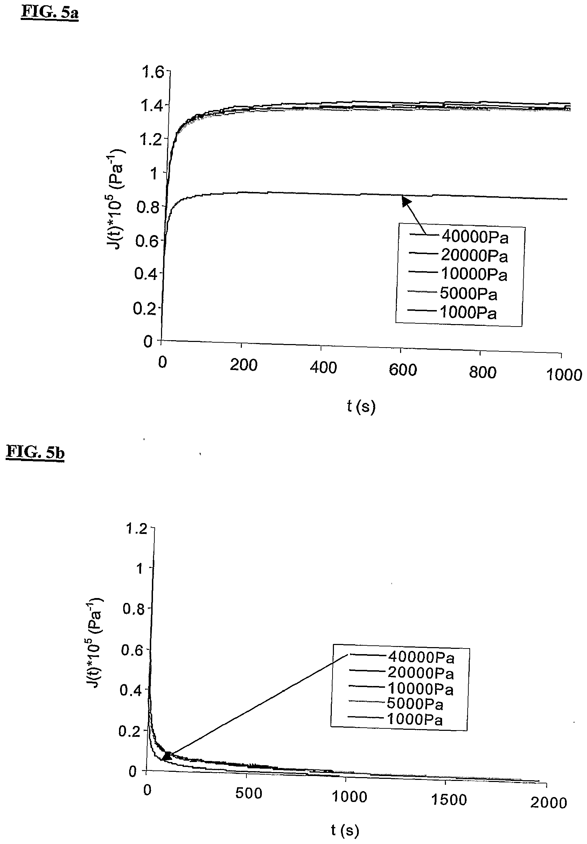

Les **FIG.5a** **et b** représentent les tests de fluage **FIG.5a** et recouvrance **FIG.5b****.** Des contraintes d'intensité croissante (σ) sont appliquées à l'échantillon durant 1000 s puis relaxées. L'admittance mécanique (compliance) *J* = *deformation*/*contrainte* est représentée en fonction du temps. Les déformations sont de 1.47 %, 7.43 %, 15.1%, 30.7% et 36.5% respectivement.

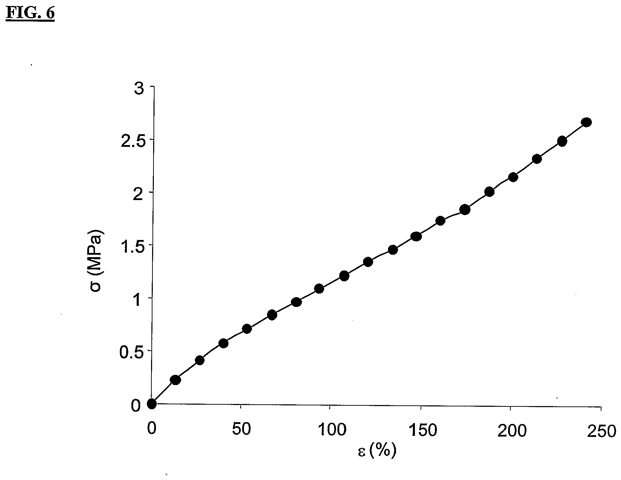

La **FIG.6** représente une expérience de traction uniaxiale à 90°C du composé **UT1008** jusqu'à rupture. La contrainte sigma est représentée en fonction de la déformation, *epsilon*□ où epsilon = (l-l₀)/l₀. La vitesse d'élongation est de
100 %.min⁻¹. La déformation finale est de 240 %. Le composé **UD1018** donne des résultats similaires.

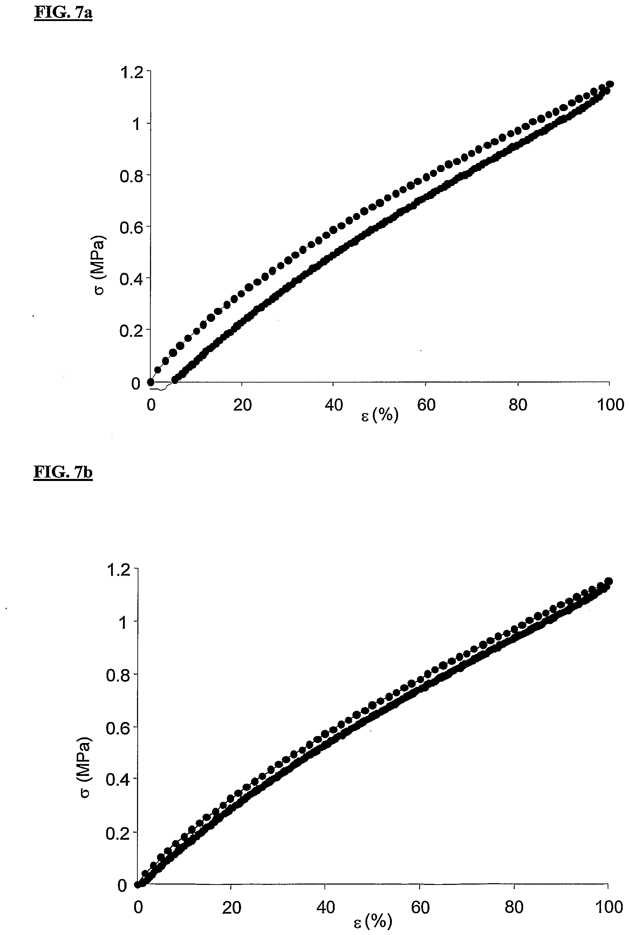

Les **FIG.7a** **et b** représentent la contrainte sigma au cours des cycles de traction (élongation et retour sans rupture) du composé **UT1008** à 90°C. La déformation maximale est de 100%. La vitesse de déformation est de 100%.min⁻¹ à l'élongation et -40 %.min⁻¹ pour le retour. On constate une déformation irréversible de 5% après le premier cycle **FIG.7a**, on ne constate pas de déformation irréversible au second cycle **FIG.7b****.**

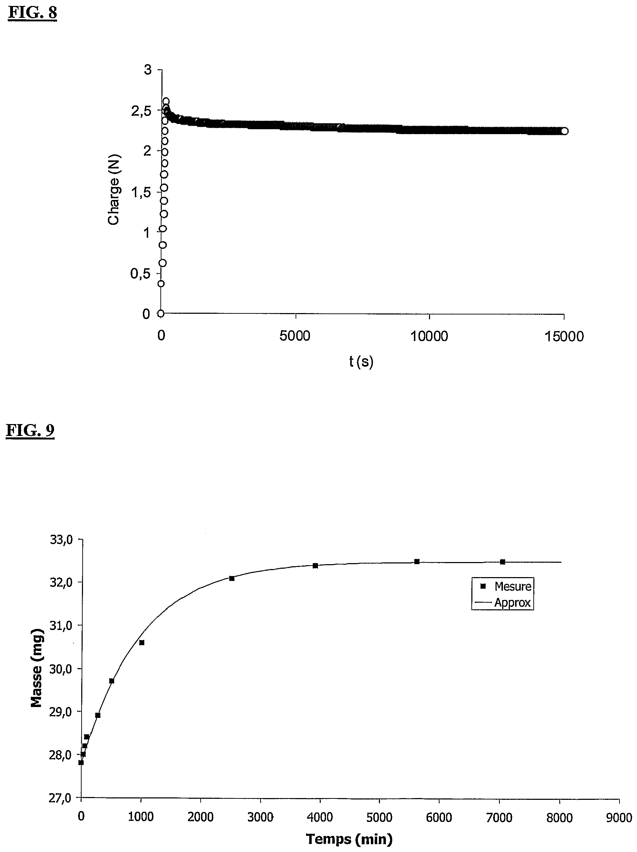

La **FIG.8** représente des expériences de fluage pour **UT1008.** La déformation est de 100% et maintenue pendant 24 heures. Les vitesses de déformation sont de 50 %.min⁻¹ et la température 70°C.

La **FIG.9** représente des expériences de gonflement de **UT1008B** à l'eau à température ambiante.

### Gonflement

Deux éprouvettes de traction en forme d'haltères (distance inter-haltères de 25mm) ont été mises en présence de dodécane pendant 96 heures à température ambiante de façon à gonfler les échantillons avec environ 10% de dodécane (éprouvette 1) et environ 15% de dodécane (éprouvette 2).

Après 96 heures les échantillons sont séchés en surface avec du papier puis pesés pour mesurer le gonflement. Les gonflements effectifs mesurés par pesée sont :
- éprouvette 1 : 8.6%
- éprouvette 2 : 12.8%
Avant d'effectuer les tests mécaniques; les échantillons sont maintenus à 60°C pendant 12 heures dans un récipient clos.

### Essais de traction

### Eprouvette 1 : 8.6% de dodécane

Cycle 1. Elongation à 100% (vitesse 100%/min) puis retour à 0% (vitesse 40%/min). La perte de recouvrance est de 5.9% après 200 min.
Cycle 2. Elongation à 100% (vitesse 100%/min) puis retour à 0% (vitesse 40%/min). La perte de recouvrance est de 0.3% après 70 min.
Cycle 3. Elongation à 400% (vitesse 40%/min). La perte de recouvrance est de 7.6% après 60 min.
Cycle 4. Elongation jusqu'à la rupture (vitesse 40%/min). Rupture à 570%. Après rupture on met en contact les deux bouts de l'éprouvette. Celle-ci est conservée verticalement. la perte de recouvrance est de 1.1% après 24 heures
Cycle 5. Elongation jusqu'à la rupture (vitesse 40%/min). Rupture à 300%. Après rupture on met en contact les deux bouts de l'éprouvette. Celle-ci est conservée verticalement. la perte de recouvrance est de 0.1% après 36 heures.
Cycle 6 Elongation jusqu'à la rupture (vitesse 40%/min). Rupture à 220%.

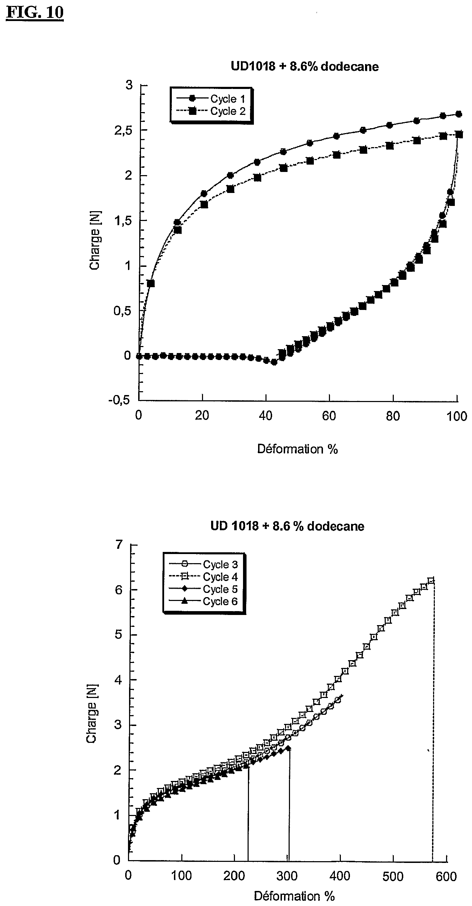

Les **FIG.10a et b** représentent les essais précédents de traction uniaxiale à 25°C du composé **UD1018** additionné de 8.6 % de dodécane , a avant rupture (cycles 1-3), b) jusqu'à rupture (cycle 4), c) après ruptures et recollements successifs (cycles 5,6). La contrainte est représentée en fonction de la déformation définie ci-dessus. La vitesse d'élongation est de +100 %.min⁻¹ (cycles 1,2), +40% min⁻¹ (cycles 3-6). La déformation à la rupture est de 570 %.

### Eprouvette 2 : 12.8% de dodécane

Cycle 1. Elongation à 100% (vitesse 40%/min) puis retour à 0% (vitesse 20%/min). La perte de recouvrance est de 3% après 60 min
Cycle 2. Elongation à 100% (vitesse 40%/min) puis retour à 0% (vitesse 20%/min). La perte de recouvrance est de 0.3% après 60 min
Cycle 3. Elongation à 100% (vitesse 40%/min) puis retour à 0% (vitesse 20%/min). La perte de recouvrance est de 0.3% après 60 min
Cycle 4. Elongation jusqu'à la rupture (vitesse 40%/min). Rupture à 635%
Cycle 5. Après rupture on met en contact les deux bouts de l'éprouvette. Celle-ci est conservée verticalement. la perte de recouvrance est de 10% après 36 heures
Cycle 6 Elongation jusqu'à la rupture (vitesse 40%/min). Rupture à 240%.

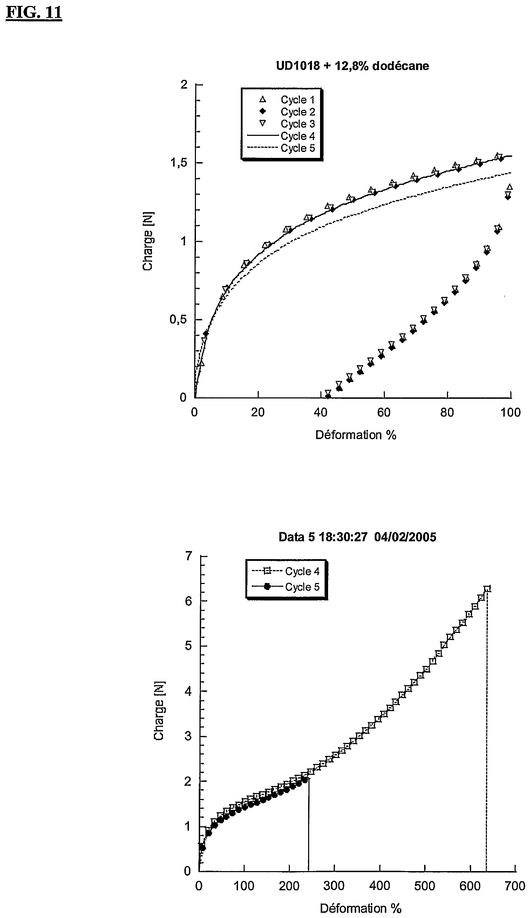

Les **FIG.11** représentent les essais précédents de traction uniaxiale à 25°C du composé **UD1018** additionné de 12.8 % de dodécane , a) avant rupture (cycles 1-3), b) jusqu'à rupture (cycle 4), c) après rupture et recollement (cycle 5). La contrainte est représentée en fonction de la déformation définie ci-dessus. La vitesse d'élongation est de +40% min⁻¹. La déformation à la rupture est de 635 %

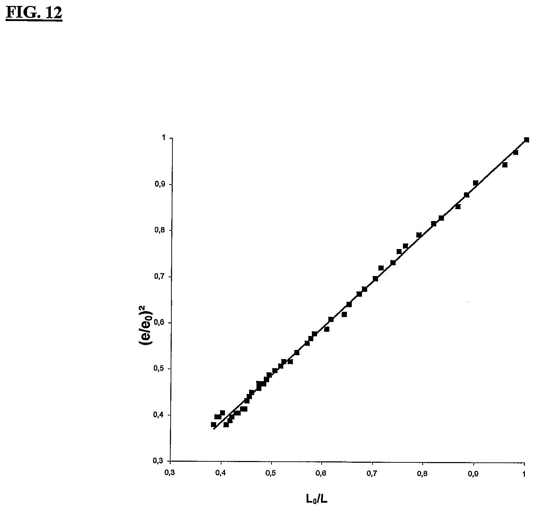

La **FIG.12** représente l'évolution des dimensions d'une zone rectangulaire de dimensions L₀×e₀ repérée sur une face de l'éprouvette pendant un essai de traction uniaxiale. L/L₀ est la déformation suivant l'axe de traction, e/e₀ est la déformation dans la direction perpendiculaire à l'axe de traction. Par le critère (L₀/L)/(e/e₀)² = 1, on vérifie qu'il s'agit d'une déformation à volume constant.

## Revendications

1. Matériau comprenant au moins une molécule de masse moléculaire en nombre comprise entre 500 et 1500 g/mole, ladite molécule comprenant au moins trois groupes fonctionnels associatifs, chaque groupe fonctionnel associatif répondant à la formule (1) suivante : 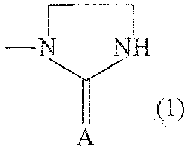 dans laquelle A désigne l'oxygène, les atomes de carbone sur la formule (1) pouvant être substitués, susceptible de former une liaison physique, les molécules susceptibles de former des liaisons physiques étant issues de triacides ou d'un mélange comprenant des diacides et des triacides, ces diacides ou triacides comportant au moins 5 atomes de carbone,
ledit matériau étant **caractérisé en ce qu'**il comprend (i) des molécules ayant au moins 3 groupes associatifs et (ii) des molécules ayant un seul groupe associatif, telles que la différence entre le nombre de groupes associatifs appartenant aux molécules qui possèdent au moins trois groupes associatifs par molécule et le double du nombre total de molécules comportant au moins trois groupes associatifs est supérieur à 80% du nombre de molécules comportant un seul groupe associatif, et telles que la masse moléculaire en nombre des molécules constituant le matériau est comprise entre 500 et 1500 g/mole,
et qu'il présente une élasticité caoutchoutique mesurée à la température d'utilisation, ladite élasticité caoutchoutique étant définie par le fait qu'après une déformation sous contrainte uniaxiale pendant 15 minutes dudit matériau d'une longueur initiale L₀ à une longueur L_{d} tel que (L_{d}-L₀)/L₀ est supérieur ou égale à 0,2, le matériau se retrouve après relâchement de la contrainte uniaxiale avec une longueur L_{f} tel que (L_{f}-L₀)/L₀ est inférieur supérieur ou égale à 0,05 sachant que L₀ est la longueur initiale du matériau, L_{d} est la longueur du matériau déformé sous contrainte uniaxiale et L_{f} est la longueur finale du matériau après relâchement de la contrainte uniaxiale.

2. Matériau selon la revendication 1 **caractérisé en ce que** (L_{d}-L₀)/L₀ est supérieur ou égale à 0,8.

3. Matériau selon la revendication 1, **caractérisé en ce que** (L_{d}-L₀)/L₀ est supérieur ou égal à = 1.

4. Matériau selon l'une des revendications précédentes, **caractérisé en ce que** les molécules susceptibles de former des liaisons physiques sont d'origine végétale.

5. Matériau selon l'une des revendications précédentes, **caractérisé en ce que** les molécules susceptibles de former des liaisons physiques sont des molécules ayant de 24 à 90 atomes de carbones.

6. Matériau selon l'une des revendications précédentes dans lequel la différence entre le nombre de groupes associatifs appartenant aux molécules qui possèdent au moins trois groupes associatifs par molécule et le double du nombre total de molécules comportant au moins trois groupes associatifs est supérieur à 100% du nombre de molécules comportant un seul groupe associatif.

7. Matériau selon l'une des revendications précédentes dans lequel la différence entre le nombre de groupes associatifs appartenant aux molécules qui possèdent au moins trois groupes associatifs par molécule et le double du nombre total de molécules comportant au moins trois groupes associatifs est supérieur à 150% du nombre de molécules comportant un seul groupe associatif.

8. Matériau selon l'une quelconque des revendications précédentes dans lequel sur chacune des molécules ayant au moins 3 groupes associatifs capables de s'associer par des interactions non covalentes l'un des groupes au moins a la formule suivante: 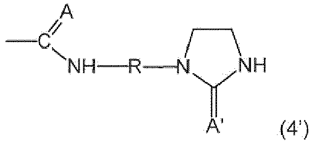 dans laquelle A et A' désignent l'oxygène, R un motif organique de masse comprise entre 14 et 300 g/mole.

9. Matériau selon la revendication 8 dans lequel R est choisi parmi le groupement -CH₂-CH₂- et le groupement -CH₂-CH₂-NH-CH₂-CH₂-.

10. Matériau selon la revendication 8 ou 9 dans lequel tous les groupes associatifs des molécules ayant au moins 3 groupes associatifs sont de formule (4').

11. Matériau selon l'une quelconque des revendications précédentes dans lequel les molécules unies par des liaisons non covalentes sont choisies parmi : 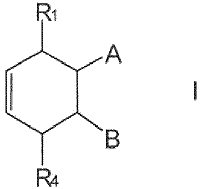 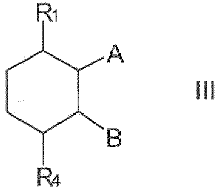 où (A,B) = (R₂,R₃) ou (R₃,R₂)
dans lesquelles R₁, R₂ sont des chaînes hydrocarbonées saturées ou insaturées terminées par un groupement amide secondaire porteur d'une terminaison 2-imidazolidone et R₃, R₄ des chaînes hydrocarbonées saturées ou insaturées.

12. Matériau selon l'une quelconque des revendications 1 à 10 dans lequel les molécules unies par des liaisons non covalentes sont choisies parmi : 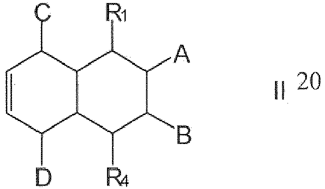 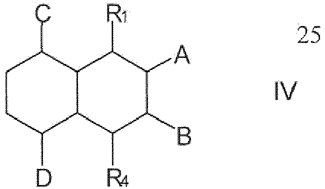 où (A,B) = (R₂,R₃) ou (R₃,R₂), (C,D) = (R₆,R₅) ou (R₅,R₆)
dans lesquelles R₁, R₂ et R₅ sont des chaînes hydrocarbonées saturées ou insaturées terminées par un groupement amide secondaire porteur d'une terminaison 2-imidazolidone et R₃, R₄ et R₆ des chaînes hydrocarbonées saturées ou insaturées.

13. Matériau selon la revendication 11 ou 12 dans lequel :
R₁, R₅ = 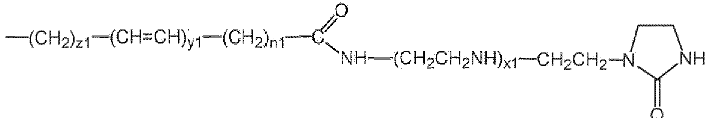 dans lesquels n₁ = 5 à 8, x₁ = 0 ou 1, y₁ = 0 ou 1, z₁ = 0 ou 1
R₂ = 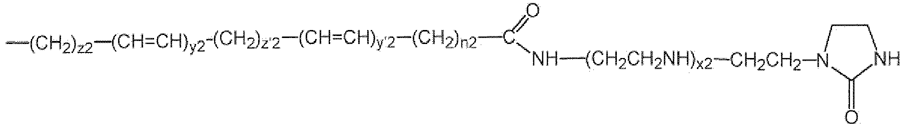 dans lequel :
n₂ = 5 à 8, x₂ = 0 ou 1, y₂ = 0 ou 1, z₂ = 0 ou 1, y'₂ = 0 ou 1, z'₂ = 0 ou 1.
R₃, R₄, R₆ = -(CH₂)_{z3}-(CH=CH)ₓ₃-(CH₂)ₙ₃-CH₃
où n₃ = 1 à 5, x₃ = 0 ou 1, z₃ = 0 ou 1.

14. Objets constitués en partie ou en totalité du matériau selon l'une quelconque des revendications précédentes.

15. Utilisation d'un matériau selon l'une des revendications 1 à 13 pour fabriquer des joints d'étanchéité, des isolants thermiques ou acoustiques, des pneumatiques, des câbles, des gaines, des semelles de chaussures, des emballages, des revêtements (des peintures, des produits cosmétiques, des films), des colliers de serrage élastiques, des tubes à vide, des tubes et flexibles de transport, des additifs rhéologiques, des fluides, des adhésifs et des colles thermofusibles.

## Patentansprüche

1. Material, umfassend mindestens ein Molekül mit einer zahlenmittleren Molmasse zwischen 500 und 1500 g/mol, wobei das Molekül mindestens drei assoziative funktionelle Gruppen umfasst, wobei jede assoziative funktionelle Gruppe der folgenden Formel (1) entspricht: 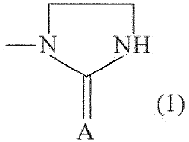 wobei A für Sauerstoff steht, wobei die Kohlenstoffatome in Formel (1) substituiert sein können, und zur Bildung einer physikalischen Bindung befähigt ist, wobei sich die Moleküle, die zur Bildung einer physikalischen Bindung befähigt sind, von Trisäuren oder einem Gemisch, das Disäuren und Trisäuren umfasst, ableiten, wobei diese Disäuren oder Trisäuren mindestens 5 Kohlenstoffatome enthalten,
wobei das Material **dadurch gekennzeichnet ist, dass** es (i) Moleküle mit mindestens 3 assoziativen Gruppen und (ii) Moleküle mit einer einzigen assoziativen Gruppe derart umfasst, dass die Differenz zwischen der Zahl von assoziativen Gruppen, die zu den Molekülen mit mindestens drei assoziativen Gruppen pro Molekül gehören, und dem Doppelten der Gesamtzahl von Molekülen mit mindestens drei assoziativen Gruppen größer als 80 % der Zahl von Molekülen mit einer einzigen assoziativen Gruppe ist, und dass die zahlenmittlere Molmasse der Moleküle, aus denen das Material aufgebaut ist, zwischen 500 und 1500 g/mol liegt,
und dass es eine bei der Verwendungstemperatur gemessene Kautschukelastizität aufweist, wobei die Kautschukelastizität dadurch definiert ist, dass nach einer Deformation des Materials unter uniaxialer Spannung über einen Zeitraum von 15 Minuten von einer Anfangslänge L₀ auf eine Länge L_{d} derart, dass (L_{d}-L₀)/L₀ größer oder gleich 0,2 ist, das Material nach Aufhebung der uniaxialen Spannung auf eine Länge L_{f} derart zurückkehrt, dass (L_{f}-L₀)/L₀ kleiner oder gleich 0,05 ist, wobei L₀ die Anfangslänge des Materials ist, L_{d} die Länge des unter uniaxialer Spannung verformten Materials ist und L_{f} die Endlänge des Materials nach Aufhebung der uniaxialen Spannung ist.

2. Material nach Anspruch 1, **dadurch gekennzeichnet, dass** (L_{d}-L₀)/L₀ größer oder gleich 0,8 ist.

3. Material nach Anspruch 1, **dadurch gekennzeichnet, dass** (L_{d}-L₀)/L₀ größer oder gleich 1 ist.

4. Material nach einem der vorhergehenden Ansprüche, **dadurch gekennzeichnet, dass** die Moleküle, die zur Bildung einer physikalischen Bindung befähigt sind, pflanzlichen Ursprungs sind.

5. Material nach einem der vorhergehenden Ansprüche, **dadurch gekennzeichnet, dass** es sich bei den Molekülen, die zur Bildung einer physikalischen Bindung befähigt sind, um Moleküle mit 24 bis 90 Kohlenstoffatomen handelt.

6. Material nach einem der vorhergehenden Ansprüche, wobei die Differenz zwischen der Zahl von assoziativen Gruppen, die zu den Molekülen mit mindestens drei assoziativen Gruppen pro Molekül gehören, und dem Doppelten der Gesamtzahl von Molekülen mit mindestens drei assoziativen Gruppen größer als 100 % der Zahl von Molekülen mit einer einzigen assoziativen Gruppe ist.

7. Material nach einem der vorhergehenden Ansprüche, wobei die Differenz zwischen der Zahl von assoziativen Gruppen, die zu den Molekülen mit mindestens drei assoziativen Gruppen pro Molekül gehören, und dem Doppelten der Gesamtzahl von Molekülen mit mindestens drei assoziativen Gruppen größer als 150 % der Zahl von Molekülen mit einer einzigen assoziativen Gruppe ist.

8. Material nach einem der vorhergehenden Ansprüche, wobei an jedem der Moleküle mit mindestens 3 assoziativen Gruppen, die sich durch nichtkovalente Wechselwirkungen assoziieren können, mindestens eine der Gruppen die folgende Formel aufweist: 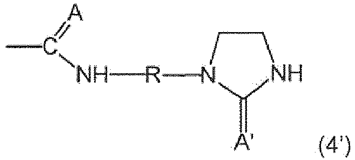 in der A und A' für Wasserstoff stehen und R für eine organische Einheit mit einer Masse zwischen 14 und 300 g/mol steht.

9. Material nach Anspruch 8, wobei R aus der Gruppe -CH₂-CH₂- und der Gruppe -CH₂-CH₂-NH-CH₂-CH₂- ausgewählt ist.

10. Material nach Anspruch 8 oder 9, wobei alle assoziativen Gruppen der Moleküle mit mindestens 3 assoziativen Gruppen der Formel (4') entsprechen.

11. Material nach einem der vorhergehenden Ansprüche, wobei die über nichtkovalente Bindungen verknüpften Moleküle aus 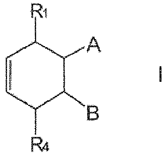 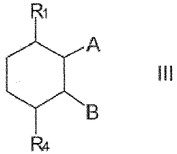 ausgewählt sind, wobei (A,B) = (R₂,R₃) oder (R₃,R₂), wobei R₁ und R₂ für gesättigte oder ungesättigte Kohlenwasserstoffketten, die durch eine sekundäre Amidgruppe mit einer 2-Imidazolidon-Endgruppe terminiert sind, stehen und R₃ und R₄ für gesättigte oder ungesättigte Kohlenwasserstoffketten stehen.

12. Material nach einem der Ansprüche 1 bis 10, wobei die über nichtkovalente Bindungen verknüpften Moleküle aus 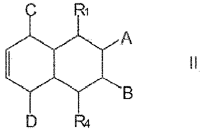 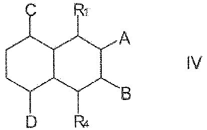 ausgewählt sind, wobei (A,B) = (R₂,R₃) oder (R₃,R₂), (C,D) = (R₆,R₅) oder (R₅,R₆),
wobei R₁, R₂ und R₅ für gesättigte oder ungesättigte Kohlenwasserstoffketten, die durch eine sekundäre Amidgruppe mit einer 2-Imidazolidon-Endgruppe terminiert sind, stehen und R₃, R₄ und R₆ für gesättigte oder ungesättigte Kohlenwasserstoffketten stehen.

13. Material nach Anspruch 11 oder 12, wobei:
R₁, R₅ = 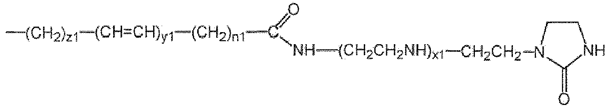 wobei
n₁ = 5 bis 8, x₁ = 0 oder 1, y₁ = 0 oder 1, z₁ = 0 oder 1,
R₂ = 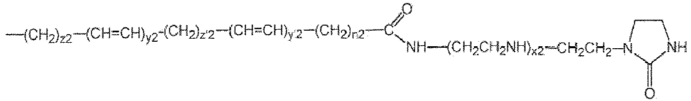 wobei
n₂ = 5 bis 8, x₂ = 0 oder 1, y₂ = 0 oder 1, z₂ = 0 oder 1, y'₂ = 0 oder 1, z'₂ = 0 oder 1,
R₃, R₄, R₆ = -(CH₂)_{z3}-(CH=CH)ₓ₃-(CH₂)ₙ₃-CH₃,
wobei n₃ = 1 bis 5, x₃ = 0 oder 1, z₃ = 0 oder 1.

14. Gegenstände, die teilweise oder vollständig aus dem Material nach einem der vorhergehenden Ansprüche bestehen.

15. Verwendung eines Materials nach einem der Ansprüche 1 bis 13 zur Herstellung von Dichtungen, Wärme- oder Schallisoliermitteln, Reifen, Kabeln, Hülsen, Schuhsohlen, Verpackungen, Überzügen (Anstrichmitteln, kosmetischen Produkten, Filmen), elastischen Klemmschellen, Vakuumrohren, Transportrohren und -schläuchen, Rheologieadditiven, Fluiden, Klebstoffen und Schmelzklebstoffen.

## Claims

1. Material comprising at least one molecule with a number-average molecular mass between 500 and 1500 g/mol, said molecule comprising at least three associative functional groups, each associative functional group corresponding to the formula (1) below: 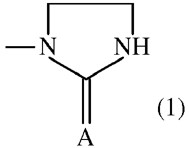 in which A denotes oxygen, it being possible for the carbon atoms on formula (1) to be substituted, capable of forming a physical bond, the molecules capable of forming physical bonds being derived from triacids or from a mixture comprising diacids and triacids, these diacids or triacids containing at least 5 carbon atoms, said material being **characterized in that** it comprises (i) molecules having at least 3 associative groups, and (ii) molecules having a single associative group, such that the difference between the number of associative groups belonging to the molecules which have at least three associative groups per molecule and double the total number of molecules comprising at least three associative groups is greater than 80% of the number of molecules comprising a single associative group, and such that the number-average molecular mass of the molecules constituting the material is between 500 and 1500 g/mol, and **in that** it has a rubbery elasticity measured at the temperature of use, said rubbery elasticity being defined by the fact that, after a distortion under uniaxial stress for 15 minutes of said material from an initial length L₀ to a length L_{d} such that (L_{d}-L₀)/L₀ is greater than or equal to 0.2, the material returns, after relaxation of the uniaxial stress, to a length L_{f} such that (L_{f}-L₀)/L₀ is less than or equal to 0.05, given that L₀ is the initial length of the material, L_{d} is length of the distorted material under uniaxial stress, and L_{f} is the final length of the material after relaxation of the uniaxial stress.

2. Material according to Claim 1, **characterized in that** (L_{d}-L₀)/L₀ is greater than or equal to 0.8.

3. Material according to Claim 1, **characterized in that** (L_{d}-L₀)/L₀ is greater than or equal to 1.

4. Material according to one of the preceding claims, **characterized in that** the molecules capable of forming physical bonds are of plant origin.

5. Material according to one of the preceding claims, **characterized in that** the molecules capable of forming physical bonds are molecules having from 24 to 90 carbon atoms.

6. Material according to one of the preceding claims, in which the difference between the number of associative groups belonging to the molecules which have at least three associative groups per molecule and double the total number of molecules comprising at least three associative groups is greater than 100% of the number of molecules comprising a single associative group.

7. Material according to one of the preceding claims, in which the difference between the number of associative groups belonging to the molecules which have at least three associative groups per molecule and double the total number of molecules comprising at least three associative groups is greater than 150% of the number of molecules comprising a single associative group.

8. Material according to any one of the preceding claims, in which, on each of the molecules having at least 3 associative groups capable of associating via non-covalent interactions, at least one of the groups has the formula below: 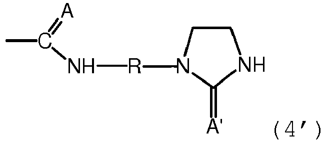 in which A and A' denote oxygen, and R denotes an organic unit with a mass of between 14 and 300 g/mol.

9. Material according to Claim 8, in which R is chosen from the group -CH₂-CH₂- and the group -CH₂-CH₂-NH-CH₂-CH₂-.

10. Material according to Claim 8 or 9, in which all the associative groups of the molecules having at least 3 associative groups are of formula (4').

11. Material according to any one of the preceding claims, in which the molecules linked via non-covalent bonds are chosen from: 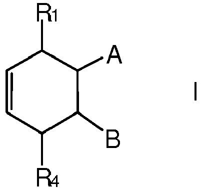 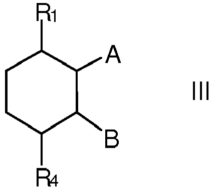 where (A,B) = (R₂,R₃) or (R₃,R₂)
in which R₁ and R₂ are saturated or unsaturated hydrocarbon-based chains that end with a secondary amine group bearing a 2-imidazolidone ending, and R₃ and R₄ are saturated or unsaturated hydrocarbon-based chains.

12. Material according to any one of Claims 1 to 10, in which the molecules linked via non-covalent bonds are chosen from: 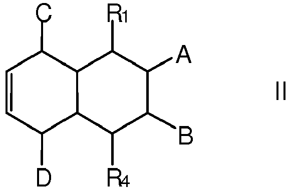 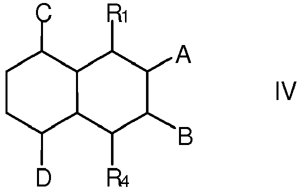 where (A,B) = (R₂,R₃) or (R₃,R₂), (C,D) = (R₆,R₅) or (R₅,R₆) in which R₁, R₂ and R₅ are saturated or unsaturated hydrocarbon-based chains that end with a secondary amide group bearing a 2-imidazolidone ending, and R₃, R₄ and R₆ are saturated or unsaturated hydrocarbon-based chains.

13. Material according to Claim 11 or 12, in which:
R₁, R₅ = 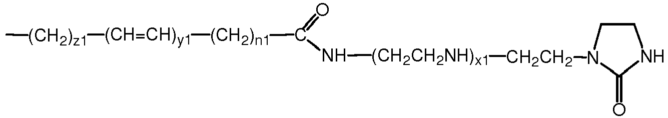 in which
n₁ = 5 to 8, x₁ = 0 or 1, y₁ = 0 or 1, z₁ = 0 or 1
R₂ = 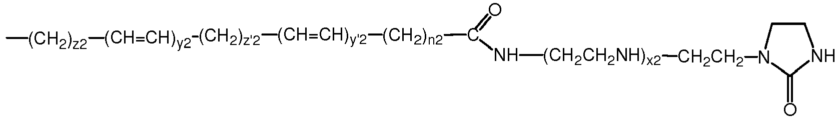 in which:
n₂ = 5 to 8, x₂ = 0 or 1, y₂ = 0 or 1, z₂ = 0 or 1, y'₂ = 0 or 1, z'₂ = 0 or 1,
R₃, R₄, R₆ = -(CH₂)_{z3}-(CH=CH)ₓ₃-(CH₂)ₙ₃-CH₃
where n₃ = 1 to 5, x₃ = 0 or 1, z₃ = 0 or 1.

14. Objects consisting partly or completely of the material according to any one of the preceding claims.

15. Use of a material according to one of Claims 1 to 13, for manufacturing gaskets, thermal insulating materials or sound-proofing materials, tyres, cables, sheaths, soles of shoes, packagings, coatings (paints, cosmetic products, films), elastic clamping collars, vacuum tubes, transport tubes and hoses, rheological additives, fluids, adhesives and hot-melt adhesives.
